Europäisches Patentamt

European Patent Office

Office européen des brevets

(11) Publication number: 0 284 977
A1

# (12) EUROPEAN PATENT APPLICATION

(21) Application number: 88104632.0

(22) Date of filing: 23.03.88

(51) Int. Cl.⁴: F16H 31/00 , F16H 19/02 , F16H 27/02

(30) Priority: 25.03.87 IT 4156287

(43) Date of publication of application:
05.10.88 Bulletin 88/40

(84) Designated Contracting States:
ES GR

(71) Applicant: Occari, Pierantonio
Via Pierobon, 4
I-35100 Padova(IT)

(72) Inventor: Occari, Pierantonio
Via Pierobon, 4
I-35100 Padova(IT)

(74) Representative: Piovesana, Paolo
Corso del Popolo, 70
I-30172 Venezia-Mestre(IT)

(54) Hydraulic slow and reversible motor, with high specific work.

(57) Hydraulic reversible slow motor with high specific work characterized by comprising a virtual rack of infinite lenght generated by a hydraulic actuator (1,2) with linear reciprocating motion and by at least a couple of teeth (22,23) engaging alternately with the teeth of a wheel (24) to be driven.

FIG.3

The present invention relates to a hydraulic slow and reversible motor, with high specific work.

Rotary hydraulic motors with pistons of significant displacement and rotary hydraulic motors with small rating at high number of revolutions per minute are well known. The latters are keyed on mechanical reduction units which convert the work supplied by the motor at high speed into correspondent adequate work at low speed.

The drawbacks of these rotary hydraulic motors are well known and consist mainly in their encumbrance, significant weight and consequent high cost.

Furthermore motors are well known made up by hydraulic cylinders with single or double action. Although they have the advantage of reduced dimensions, they still suffer from the drawback of a limited stroke.

Another drawback consists in that, when the stroke is increased considerably, the relevant weight, although lower than corresponding rotary motors, becomes considerably high.

A further drawback consists in that, when used to drive a rotating machine member, they must be hinged on supporting structures with remarkable sizes to withstand the significant bending loads generated in the system.

On the contrary, the hi-speed rotary motors with low rating, which may be coupled to a mechanical reduction unit, have reduced sizes, weight and cost, but need the use of a reduction units of high weight and dimensions.

An aim of the invention is to realize a hydraulic slow and reversible motor which may generate, having very limited dimension, a high work, even with limited power rating.

Another aim of the invention is to realize a hydraulic motor of reversible type.

Another aim of the invention is to realize a hydraulic motor without dead centers and which remains constantly engaged with the driven member.

These aims are achieved according to the invention by a slow hydraulic reversible motor with high specific work characterized by comprising a virtual rack of infinite length generated by a hydraulic actuator with linear reciprocating motion and by at least a couple of teeth engaging alternately with the teeth of a gear to be driven.

The present invention is hereinafter described with reference to the enclosed drawings in which:

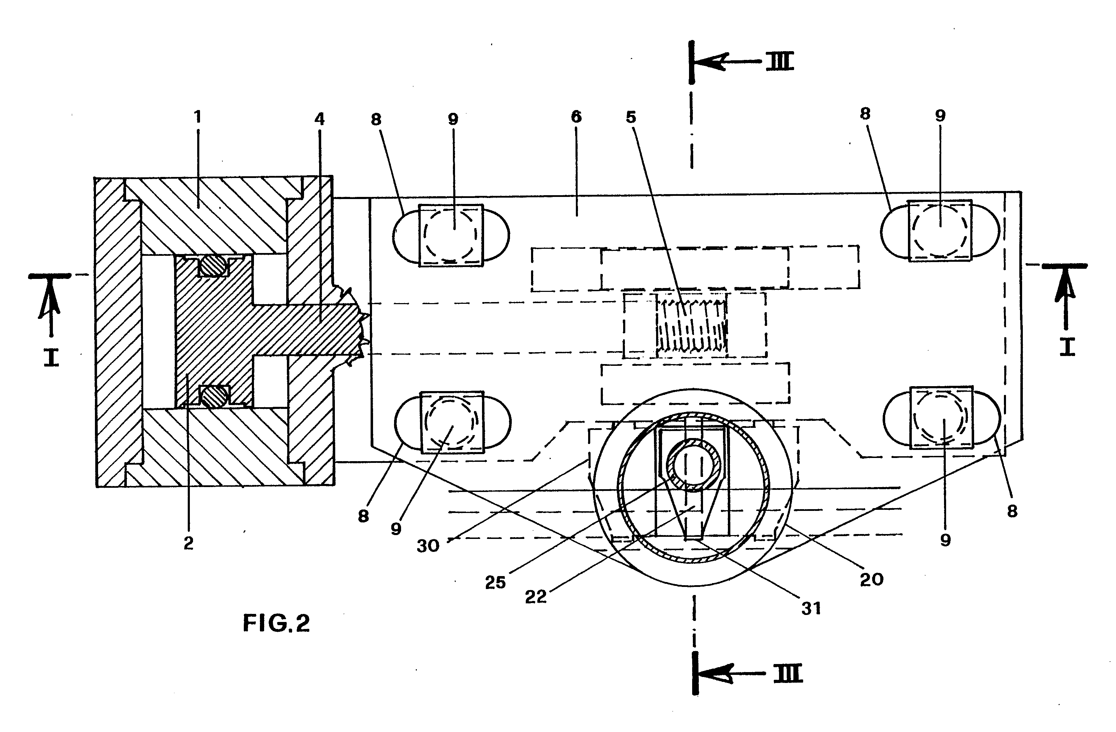

fig. 1 shows schematically the motor according to the invention along the partial section I-I of fig. 2,

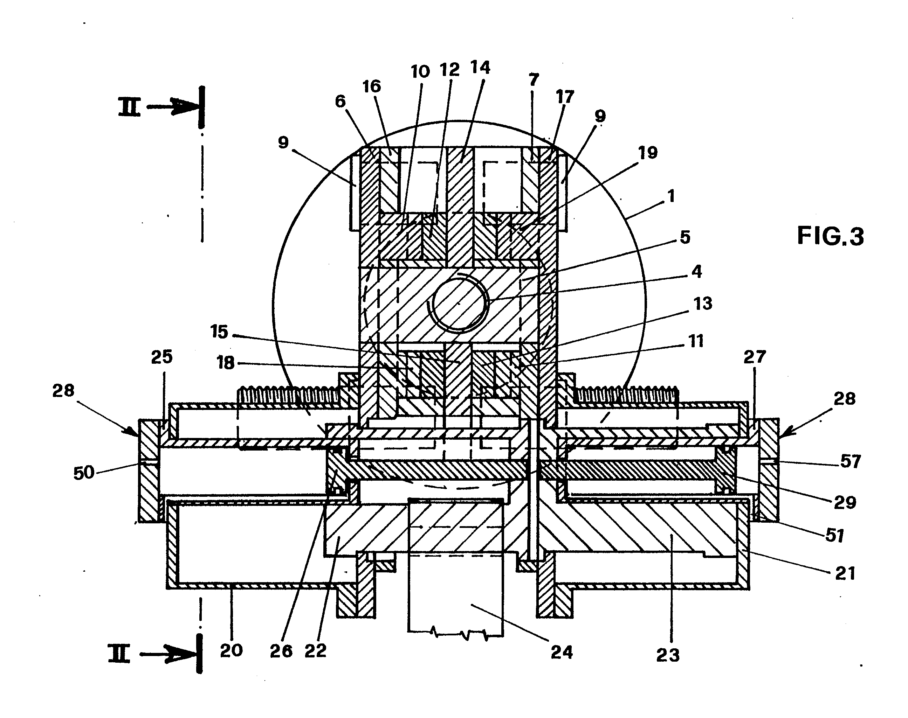

fig. 2 shows it along the longitudinal section II-II of fig. 3,

fig. 3 shows it along the cross section III-III of fig. 2, and

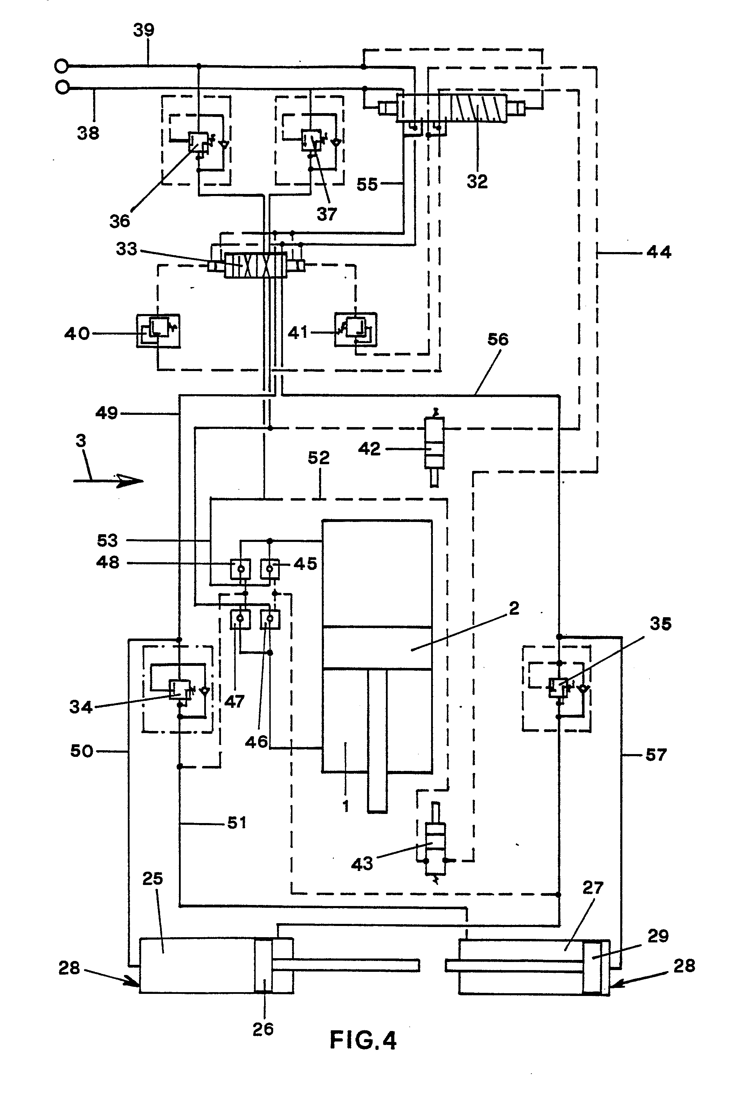

fig. 4 shows schematically the operating and control hydraulic circuit of the motor according to the invention.

As can be seen from the figures the motor according to the invention comprises an assembly cylinder 1 - piston 2 connected to a hydraulic power unit 3, which shall be further described in details.

The stem 4 of the piston 2 is connected, outside the cylinder 1, to a cross pin 5 having its ends engaged with two plates 6,7 which move parallely alongside said stem 4.

Both plates 6,7 present four horizontal slots 8, crossed by pins 9 fixed to the main machine frame, where also cylinder 1 is mounted.

Two racks 10,11 are mounted near the inner opposite faces of plates 6,7.

Particularly the rack 10 protrudes more than rack 11 and both racks engage with two pinions 12,13 located, as their corresponding racks, at two different levels and supported respectively by pins 14 and 15 integral with the main machine frame.

Because of different protruding of the two racks, 10,11 the distance between plates 6,7 and the axis of the stem 4 is different and is obviously larger for plate 6 than for plate 7.

The pins 9, supporting plates 6,7, also support two plates 16,17; with respect to stem 4 the plate 16 is located on the same side as plate 6, but is distant from pins 14,15 as much as plate 7.

On plate 16 is mounted a rack 18 engaging with pinion 13.

On the contrary the plate 17 is located, with respect to stem 4, on the same side of plate 7, but is distant from pins 14,15 as much as plate 6, engaging with pinion 12; on the plate 16 is mounted, at the same level of rack 10, a rack 19 engaging with pinion 12.

Since the configuration described above foresees that the stem 4 is flanked on both sides by two couples of plates and each plate is connected by its own rack to the two central pinions, such connections are allowed for racks 10 and 19, mounted on "external" plates 6,17, due to the presence in the internal plates 16, 7 of horizontal slots where the above racks pass through.

Similarly, as the pin 5 is connected to plates 6 and 7, which are respectively internal and external, the connection with external plate 6 is made possible by means of another horizontal slot in the corresponding internal plate 16.

Laterally to the two external plates 6,17 two teeth 22,23 are provided, moving inside their respective housings 20,21.

Each tooth 22,23 is substantially formed by a metallic body of roughly prismatic shape with lower outline suitable to engage with the teeth of a wheel 24 or of a rack, which are the members to be driven.

The plates 6,17 integral with the housings 20,21 of the teeth 22,23 present a slot which allows said teeth to move transversally through; the teeth are moved along their axis towards corresponding plate 7,16 by respectively hydraulic actuators 28, whose cylinder 25,27 is freely housed in the tooth body 22,23 and whose piston 26,29 is fixed to the said body by the free end of its stem.

A hydraulic circuit controlling the movements of the pistons 26,29 in either directions is connected to power unit 3.

Each plate 16,7 adjacent internally to plate 6,17, supporting the corresponding tooth 22,23 presents an opening 30 with larger sizes to allow as it will be explained after, the mutual cross movements of other respective tooth 23,22.

Furthermore, in correspondence to said opening 30 there is a recess 31 where the end of tooth 22,23 constrained to the correspondent plate engages.

The power unit 3, operating the two actuators 28 of the teeth 22,23 and the assembly cylinder 1 - piston 2 comprises:
- one twelve-ways flow deviation device 32 and a double distributor 33,
- a first couple of sequence valves 34,35, the one 34 being located between the distributor 33 and the inlet side of the cylinder 27 (inlet side denominates the portion of cylindrical room which includes the piston stem); the other 35 is placed between distibutor 33 and inlet side of the other cylinder 25,
- a second couple of sequence valves 36,37 located between the delivery duct 38, return duct 39 and distributor 33,
- a couple of pressure relief valves 40,41 located in the circuit controlling the spool of distributor 33,
- a first couple of interception valves 42,43 actuated by the main piston 2, near the two stroke-end positions, suitable to intercept the duct 44 controlling the spool of distibutor 33,
- four piloted block valves 45,46,47,48 controlling the assembly cylinder 1 - piston 2,
- a quantity of ducts properly interconnecting the various components to ensure the correct sequence of the operating cycle of the machine: reference to them shall be made in the following description of the operation.

To fix a reference point it is useful to consider the configuration shown in the figures as the initial one.

In this start configuration:
- the tooth 22 actuated by the piston 26 protrudes from plate 6 and engages its end with the corresponding plate 7, passing through the plate 16,
- the tooth 23 actuated by the piston 29 is completely lodged in the housing 21,
- the piston 2 is at mid-strok in its cylinder 1,

- the hydraulic fluid is pushed by the pump, through duct 38, flow deviation device 32, distributor 33, duct 49 and hence it is split in two branches and through one of the two, duct 50 and 51, it acts on pistons 26 and 29 of corresponding cylinders 25 and 27. As these pistons are both at stroke-end the fluid shall not affect them and because of its high pressure shall maintain the sequence valve 37 open, through which the fluid crosses distributor 33 and hence splits into the two branches in ducts 52 and 53.

In the duct 52 the fluid is stopped by interception valve 43, which is now close, whereas in duct 53 it crosses block valve 48, actuated by the pressure at the outlet of sequence valve 34, and valve 45 and enters the inlet side of cylinder 1, keeping piston 2 moving.

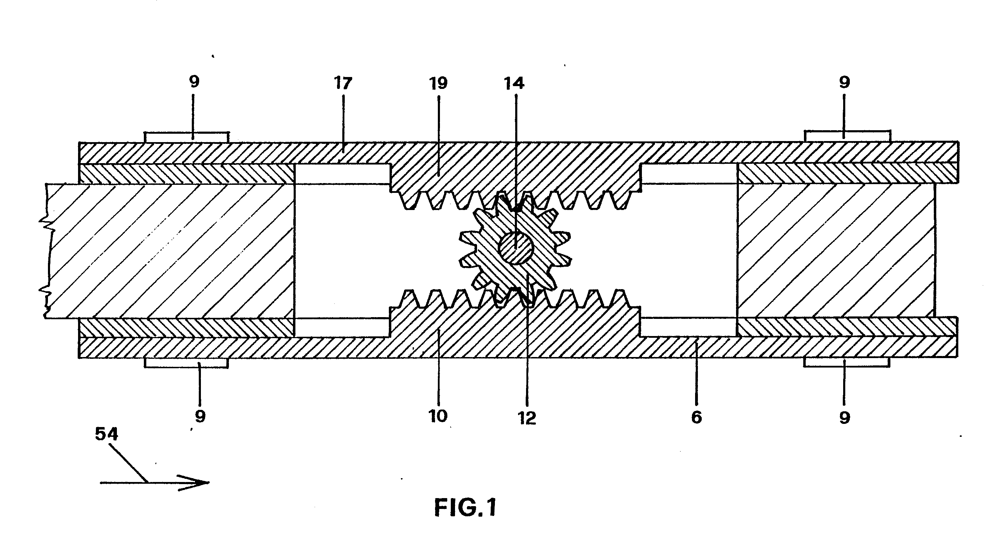

The axial movement of piston 2 causes, by means of connecting pin 5, the axial translation of plates 6,7 as shown by the arrow 54 in fig. 1.

The displacement of the two plates 6 and 7 and of racks 10,11 integral with them causes the two pinions 12 and 13 to rotate in different directions and thus the displacement in opposite direction of plates 16,17 because of the interconnection with the two racks 18 and 19.

Practically the stroke of piston 2 as shown by arrow 54 causes the two plates 6,7 to move consistently and plates 16,17 to move oppositely to said piston.

As tooth 22 associated with plates 6,7 is during this phase protruding and engaged with the tooth-wheel 24, the displacement of the two plates 6,7 causes said wheel to rotate of a certain angle.

Contemporarly the two plates 16,17 translating in opposite direction, do not cause any interference with the movement of wheel 24, as the tooth 23 associated with them is fully lodged in its housing 21.

When the piston 2 reaches its stroke-end it releases the interception valve 43, which opens the fluid flow through the duct 44. The fluid may then crosses the interception valve 43, the flow deviation device 32 and opens the pressure relief valve 41 to operate the spool of distributor 33.

Following this operation the fluid coming from the duct 38 may enter directly the distributor 33 through the duct 55, without passing through the sequence valve 37, and goes out from duct 56 to split in two branches, one entering directly, through the duct 57, the outlet side of the cylinder 27, thus causing relevant piston 29 to protrude, the other entering the inlet side of cylinder 25, after having passed through the sequence valve 35, which function is to allow the flow of the fluid only after that the piston 29 has reached its stroke-end.

Practically the fluid coming from the duct 56 firstly causes the operation of the piston 29, then the protruding of relevant tooth 23 and subsequently the operation of the piston 26 with consequent lodging of relevant tooth 22.

During the above movement the two block valves 47 and 48 prevent any flow of the fluid, which otherwise could untimely act the piston 2.

When the tooth 23 is fully engaged, the block valves 47 and 48 are open and consent the fluid to act the piston 2 in the cylinder 1 performing its return stroke. With a sequence opposite to that described before, the two plates 6,7 translate in opposite direction than before, while the two plates 16,17, which the tooth 23, now engaged with the wheel 24, is associated to, translate as shown by arrow 54 in fig. 1, i.e. in such direction as to cause a further rotation of wheel 24. Practically, due to alternate engaging of the teeth 22 and 23 with the wheel 24, to reciprocating strokes of the piston 2, unidirectional strokes of the tooth being engaged with the wheel correspond.

The above described operation continues as long as the motor driving the fluid circulation pump is fed.

If it is whished to rotate the wheel 24 in the opposite direction, the two ducts 38,39 in the power unit 3 must be exchanged eachother; in such a way first the flow deviation device 32 is operated, as to invert the feeding cycle of the cylinder 1, without however modifying the feeding cycle of the two cylinders 25,27 actuating the teeth 22,23. This exchange of the fluid feeding ducts 38,39 shall cause the sequence valve 36 to operate instead of the 37, all other considerations made insofar remaining unchanged.

Practically the hydraulic motor according to the invention is based on the principle of creating, with reciprocating movement of teeth 22,23, a virtual rack to be engaged with a wheel 24 or with a rack in order to actuate by means of this a machine member whatsoever.

It clearly results from what is explained above that the motor according to the invention presents a number of advantages with respect to both the traditional rotary hydraulic motors and to the traditional hydraulic cylinder with single or double action.

With respect to the former the motor according to the invention has sizes significantly smaller, for the same quantity or work supplied, and therefore implies much lower weight and cost.

Furthermore it may be considered as "self-locking" in the case of damage of the hydraulic feeding, as one of two teeth is always engaged and allows at the most its displacement until it reaches the position corresponding to the stroke-end position of the piston 2.

With respect to the latter it offers the advantage of a practically unlimited stroke and of the exclusion of whatever articulated linking to the supporting structure, with all the pratical advantages resulting from this exclusion.

## Claims

1. Hydraulic reversible slow motor with high specific work characterized by comprising a virtual rack of infinite lenght generated by a hydraulic actuator (1,2) with linear reciprocating motion and by at least a couple of teeth (22,23) engaging alternately with the teeth of a wheel (24) to be driven.

2. Hydraulic motor according to claim 1 characterised in that the hydraulic actuator comprises an assembly cylinder (1) - piston (2), which piston is directly connected to a member (6,7) supporting a tooth (22) and indirectly through a motion inversion device (12,13,10,19,11,18), with a member (16,17) supporting the other tooth (23), the two teeth beeing indipendently moving between an engaging and a disengaging position with said wheel (24) by means of controlling members which are synchronized with said piston (2) and such as that to the stroke of this in a certain direction corresponds the stroke in a certain direction of the tooth (23) engaging with said wheel (24) in the same direction of the former.

3. Motor according to claim 2 characterised in that the tooth (22) is supported by a couple of plates (6,7) integral with the stem (4) of said piston (2), whereas the tooth (23) is supported by a couple of plates (16,7) associated with a gear system (12,13,10,19,11,18) for the inverted synchronization of relevant motion with respect to that of said plates (6,7).

4. Motor according to claim 3 characterised in that, on the plates (6,7) supporting the tooth (22), two racks (10,11) are mounted, which are interconnected by means of pinions (12,13) to two racks (18,19) mounted on the plates (16,17) supporting the tooth (23).

5. Motor according to claim 4 characterised in that the two couples of plates (6,7;16,17) are located parallely and adjacently and are supported by pins (9) integral with the main motor frame and sliding within guiding slots provided in said plates.

6. Motor according to claim 5 characterised in that the plates (6,7,16,17) supporting each tooth (22,23) are located on both sides with respect to the stem (4) of piston (2) and are mutually alternated, i.e. the two plates (7,16) nearer to said stem (4) are associated with two different teeth (22,23) and the two plates (6,17) farer from said stem, associated as well to the two different teeth, are faced to the plates of the other couple, the internal plates (7,16) having slots in them to consent the passage of the members connecting to the others plate (6,17) of the same couple.

7. Motor according to claim 6 characterised in that on one plate (6,7) of each couple is mounted a tooth (22,23) which moves normally to said plate between an engaging position with the wheel (24) where said tooth protrudes from said plate (6,17) through a corresponding opening provided in the adjacent plate (16,7) of the other couple and engages its free end in the other plate (7,16) and a disengaging position, where it is fully located on the side of the plate (6,17) far from the other plates.

8. Motor according to claim 7 characterised in that each tooth (22,23) is provided with operating members synchronized with the movements of said assembly cylinder (1) - piston (2).

9. Motor according to one or more of the claims 1 to 8 characterized in that the hydraulic circuit feeding the assembly cylinder (1) - piston (2) and the members (28) operating the teeth (22,23) comprises feeding circuits in parallel eachother, sequence valves (34,35) located in series to said members (28) as tom ensure the beginning of the disengaging stroke of a teeth (22,23) and the beginning of the stroke of piston (2) only after the completion of engaging stroke of the other tooth (23,22).

10. Motor according to claim 9 characterised in that the feeding of assembly cylinder (1) - piston (2) and of members (28) operating the teeth (22,23) is obtained through a distributor (33), which spool is actuated in either direction by two distinct circuits in parallel with the feeding circuit of said assembly cylinder (1) - piston (2), through two different interception valves (42,43), which are released when the two stroke-end positions of said piston (2) are reached.

11. Motor according to claim 9 characterised in that the feeding of hydraulic assembly cylinder (1) - piston (2) is obtained through block valves (47,48) actuated by the outlet of said sequence valves (34,35).

12. Motor according to claim 10 characterised in that it comprises a flow deviation device (32) interposed between the distributor (33) and the main feeding circuit and connected to this in order to cause, following the exchange between main delivery (38) and return (39) lines, the inversion of the movements of piston (2), without however modifying the operating sequence of said teeth (22,23).

**FIG.1**

0 284 977

FIG.2

0 284 977

FIG.3

0 284 977

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 10 578 (COATGOUREDEN) (A.D. 1910) <br> * Whole document * <br> --- | 1 | F 16 H 31/00 <br> F 16 H 19/02 <br> F 16 H 27/02 |
| X | FR-A-1 595 665 (VILLENEUVE) <br> * Page 2, lines 10-23; figure 1 * <br> --- | 1 | |
| A | FR-A-2 156 301 (E.N.M. LTD) <br> * Whole document * <br> ----- | 1 | |

TECHNICAL FIELDS
SEARCHED (Int. Cl.4)

F 16 H
F 04 B

The present search report has been drawn up for all claims

| Place of search | Date of completion of the search | Examiner |
|---|---|---|
| THE HAGUE | 30-06-1988 | VON ARX H.P. |

EPO FORM 1503 03.82 (P0401)